# FASCICULE DE BREVET EUROPEEN

(11) **EP 1 203 380 B1**
(45) Date de publication et mention de la délivrance du brevet: **22.02.2006**
(21) Numéro de dépôt: 99927612.4
(22) Date de dépôt: 02.07.1999
(51) Int. Cl.: G21C 3/62

(54) **PROCEDE DE FABRICATION DE PASTILLES DE COMBUSTIBLE NUCLEAIRE D'OXYDE MIXTE (U, PU)O2 A PARTIR DE POUDRE D'UO2 NON COULABLE**
VERFAHREN ZUR HERSTELLUNG VON KERNBRENNSTOFFTABLETTEN AUF BASIS VON (U,PU)02 MISCHOXIDEN AUS NICHT-FLIESSFÄHIGEM UO2 PULVER
METHOD FOR MAKING MIXED OXIDE (U, PU)O 2 NUCLEAR FUEL PELLETS FROM NON-CASTABLE UO 2 POWDER

(43) Date de publication de la demande: 08.05.2002
(73) Titulaire: Belgonucleaire SA, 1200 Bruxelles (BE)
(72) Inventeur: VANDERGHEYNST, Alain, B-7370 Dour (BE); VAN VLIET, Jean, B-1850 Grimbergen (BE); PELCKMANS, Eduard, B-2460 Kasterlee (BE)
(74) Mandataire: Claeys, Pierre
(86) Numéro de dépôt international: PCT/BE1999/000084
(87) Numéro de publication internationale: WO 2001/003143

(56) Documents cités:
- EP-A- 0 760 519
- FR-A- 2 765 383

## Description

La présente invention concerne un procédé de fabrication d'oxyde mixte (U, Pu)O₂ à partir de poudres d'UO₂ non coulables.

La fabrication de combustible pour réacteurs à eau légère, à base d'oxydes d'uranium et de plutonium, généralement appelé combustible MOX, a fait l'objet de divers développements liés à la volonté de recycler du plutonium récupéré lors du retraitement des combustibles usés.

La fabrication et l'irradiation de combustible MOX dans les réacteurs à eau légère sont maintenant considérées comme une solution pour donner une résistance acceptable à la prolifération du plutonium existant sous forme séparée des produits de fission, que ce plutonium soit d'origine civile ou militaire.

Plusieurs procédés de fabrication de combustible MOX ont été développés au cours des deux dernières décennies, certains faisant appel à un broyage complet des poudres d'UO₂ et de PuO₂ pour assurer un mélange intime, d'autres se limitant au broyage d'une fraction seulement de ces poudres.

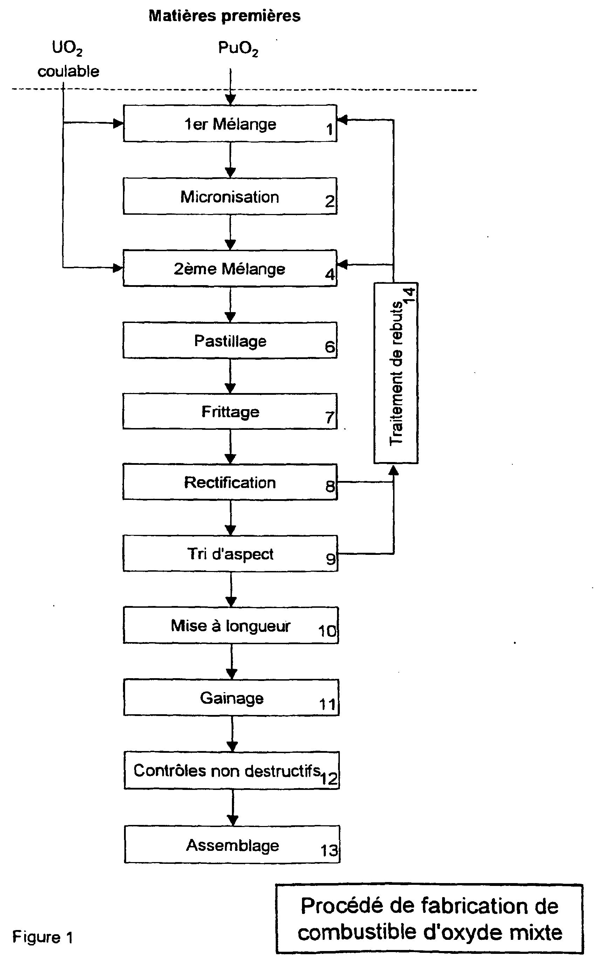

Le procédé MIMAS (acronyme pour Micronization and MASter blend = micronisation et mélange mère) qui a été développé par la déposante de la présente invention (voir figure 1) comporte la micronisation par broyage de seulement une fraction du mélange final et utilise deux mélanges successifs pour permettre une homogénéisation isotopique et pour tirer parti de l'usage de produits d'entrée UO₂ coulables (notamment pour assurer un bon remplissage des matrices des presses utilisées pour le pastillage). La mise en oeuvre de poudres d'UO₂ coulable dans le second mélange et la limitation du broyage au seul premier mélange simplifient la fabrication (par exemple en évitant des opérations de précompaction/granulation ou de sphéroïdisation du mélange d'oxyde mixte) et ont grandement simplifié, au début de son industrialisation, la qualification du combustible MOX par les utilisateurs et l'obtention des autorisations auprès des Autorités de Sûreté Nucléaire (grâce à la similitude de comportement de ce combustible MOX et du combustible UO₂).

Diverses variantes du procédé MIMAS ont été appliquées, sous des appellations parfois différentes de MIMAS, mais toutes sont caractérisées par deux mélanges successifs dont le second met en oeuvre de l'UO₂ coulable.

L'UO₂ qui sert de matière première à la fabrication du combustible à uranium enrichi et, dans la grande majorité des cas, à la fabrication du combustible MOX est obtenu par conversion d'hexafluorure d'uranium. Il existe des procédés industriels de conversion qui produisent de la poudre d'UO₂ coulable. C'est le cas notamment de deux procédés industriels de conversion par voie humide, connus dans le métier sous les noms respectifs d'"AUC", d'après le produit intermédiaire (le "AmmoniumUranyl Carbonate"), et de "TU2", d'après l'unité de transformation d'uranium dans laquelle est effectuée la conversion. Un des inconvénients de ces procédés de conversion par voie humide est la production d'une grande quantité d'effluents liquides qu'il y a lieu de traiter avant décharge. Les procédés de conversion par voie humide, dont certains ne produisent pas d'UO₂ coulable, sont progressivement remplacés par des procédés par voie sèche qui permettent de recycler les effluents gazeux, mais qui produisent généralement de la poudre d'UO₂ non coulable.

Dans le but de diversifier les sources de poudre d'UO₂ pour la fabrication de combustible MOX par des procédés de type MIMAS, il est donc utile de pouvoir mettre en oeuvre des poudres d'UO₂ non coulables.

On connaît des procédés de conditionnement de poudre d'UO₂ non coulable pour la transformer en un granulé d'UO₂ coulable et donc de propriétés adéquates pour alimenter une presse de pastillage. Divers procédés mécaniques de granulation, tels que précompaction - granulation ou agglomération - sphéroïdisation ont été développés et sont employés industriellement dans les usines de fabrication de combustible UO₂.

L'expérience a montré que ces procédés de granulation produisent des granules de résistance mécanique insuffisante pour une réalisation correcte du second mélange qui caractérise les procédés MIMAS et similaires. Dans les conditions optimales d'opération du second mélangeur, les granules sont endommagées et la coulabilité du mélange secondaire est altérée : les pastilles de combustible qui en résultent présentent des défauts importants (variabilité excessive des caractéristiques physiques du produit, défauts localisés de retrait différentiel, etc.). Alternativement, si le mode de fonctionnement du second mélangeur ou si l'appareillage mis en oeuvre pour le second mélange est adapté de façon à réaliser un brassage doux des poudres à mélanger, l'uniformité de distribution du plutonium au sein du combustible peut être altérée et les pastilles MOX ainsi produites ne répondent pas toujours aux critères de variabilité maximale de teneur en plutonium.

Afin d'éviter les inconvénients énoncés ci-dessus, le procédé de fabrication de combustible MOX à partir de poudre d'UO₂ non coulable comprend un traitement mécanique de granulation de la poudre d'UO₂ non coulable, qui ne modifie pas les propriétés chimiques (telles que la stoechiométrie) et morphologiques (telles que la grosseur des grains) de la poudre d'UO₂, mais qui permet néanmoins d'assurer à celle-ci une résistance mécanique et une coulabilité nécessaires pour mener à bien respectivement les opérations de second mélange et de pastillage.

On s'affranchit ainsi de la nécessité d'alimenter les procédés de type MIMAS en poudre d'UO₂ coulables en tant que matières premières.

Le document EP-A-0760519 divulgue tout comme le procédé MIMAS précité et illustré à la figure 1 un procédé de fabrication de pastilles de combustible nucléaire d'oxyde mixte (U,Pu)O₂ comprenant
- un dosage et un premier mélange de poudres de PuO₂ et/ou d'UO₂ et/ou de rebuts de fabrication de combustible;
- un broyage et un tamisage forcé de ce premier mélange;
- un nouveau dosage et un second mélange du premier mélange ainsi traité, d'UO₂;
- une addition et un mélange d'agents de lubrification et/ou de contrôle de porosité en combinaison avec l'étape du second mélange (0,3 % massique de porogène puis 0,3 % massique de lubrifiant sont mélangés à la poudre par brassage mécanique);
- un pastillage du second mélange et
- un frittage des pastilles ainsi formées.

Dans le procédé suivant EP-A-0760519, on ajoute en outre un produit organique soufré au premier mélange. L'invention a pour objet de diversifier les sources de poudre de UO₂ pour la fabrication de pastilles de combustible MOX par des procédés du type ou dérivés du procédé MIMAS, qui par définition mettent en oeuvre des poudres de UO₂ coulables. Or, les procédés industriels de production de poudres de UO₂ coulables ont l'inconvénient majeur de produire de grandes quantités d'effluents liquides qu'il y a lieu de traiter avant décharge. Pour atteindre ce but, le procédé suivant l'invention comprend en outre, pour au moins une partie des poudres d'UO₂ une sélection d'UO₂ non coulable et un traitement mécanique de granulation de celui-ci, de manière à le rendre coulable, avant d'utiliser l'UO₂ ainsi granulé dans au moins ledit second mélange. Ainsi on s'affranchit de la dépendance de la production de poudre de UO₂ coulables.

Suivant un mode de réalisation avantageux de l'invention, on prend de l'UO₂ non coulable dont une partie alimente telle quelle le premier mélange et une partie est soumise à un traitement de granulation avant d'alimenter le second mélange.

En variante, à titre d'exemple non limitatif, ledit traitement de granulation peut aussi être appliqué à la fraction d'UO₂ non coulable alimentant le premier mélange.

Afin d'éviter l'inconvénient susdit de résistance mécanique insuffisante d'UO₂ granulé par un des procédés de conditionnement habituels, le traitement mécanique selon l'invention est réalisé soit par un forçage de la poudre d'UO₂ non coulable à travers un tamis ou grille soit par une compression en comprimés de cette poudre à une pression élevée, telle que requise pour obtenir des propriétés de non-friabilité adéquates, suivie d'un concassage desdits comprimés. Le cas échéant, on peut ajouter au préalable à la poudre d'UO₂ un (ou des) agent(s) liant et/ou lubrifiant.

D'autres détails et particularités de l'invention ressortiront des revendications, et de la description des dessins, qui sont annexées au présent mémoire et qui illustrent, à titre d'exemples non limitatifs, le procédé de fabrication suivant l'invention.
La figure 1 montre schématiquement les étapes de la fabrication de combustible mixte suivant un procédé connu du type MIMAS.
La figure 2 montre schématiquement des étapes d'une fabrication de combustible d'oxyde mixte suivant un procédé de l'invention.
La figure 3 montre schématiquement des variantes du procédé suivant l'invention.

Dans les différentes figures, les mêmes notations de référence désignent des éléments identiques ou analogues.

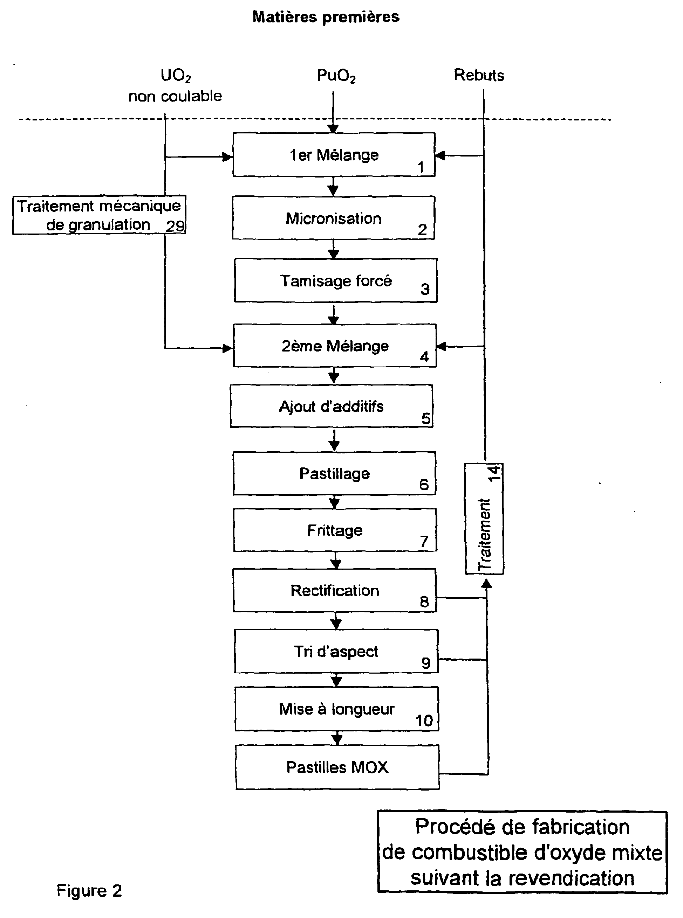

Le procédé de l'invention pour l'utilisation de poudre d'UO₂ non coulable comprend à la base un procédé de fabrication de pastilles de combustible d'oxyde mixte d'(U, Pu)O₂ c'est-à-dire dans l'ensemble (figure 2):
- un dosage et un premier mélange (étape 1) de poudres de PuO₂ et/ou de poudres d'UO₂ et/ou de rebuts de fabrication de combustible,
- une micronisation (étape 2) de ce premier mélange, en particulier par broyage, et un tamisage forcé (étape 3) de son produit, par exemple à travers une maille de 250 µm,
- un nouveau dosage et un second mélange (étape 4) du premier mélange ainsi traité, d'UO₂ et, le cas échéant, de rebuts de fabrication de combustible,
- une addition, et un mélange avec le second mélange obtenu, d'agent(s) de lubrification et/ou de contrôle de la porosité (étape 5), cette dernière étape pouvant être combinée totalement ou partiellement avec l'étape 4,
- une compression (étape 6) du second mélange en des pastilles à l'aide de presses (pastillage), et
- un frittage (étape 7) des pastilles ainsi formées, de préférence sous atmosphère d'argon (ou d'azote) et d'hydrogène humidifiés.

Ce procédé de fabrication de pastilles de combustible d'oxyde mixte peut encore comprendre usuellement, pour les pastilles ainsi obtenues, des étapes de :
- rectification à sec (étape 8),
- tri d'aspect (étape 9),
- mise à longueur (étape 10),
- mise sous gaine des pastilles et soudage de celle-ci sous la forme de crayons de combustible (étape 11, figure 1),
- pressurisation des crayons,
- contrôles non destructifs des crayons (étape 12), et
- assemblage des crayons (étape 13).

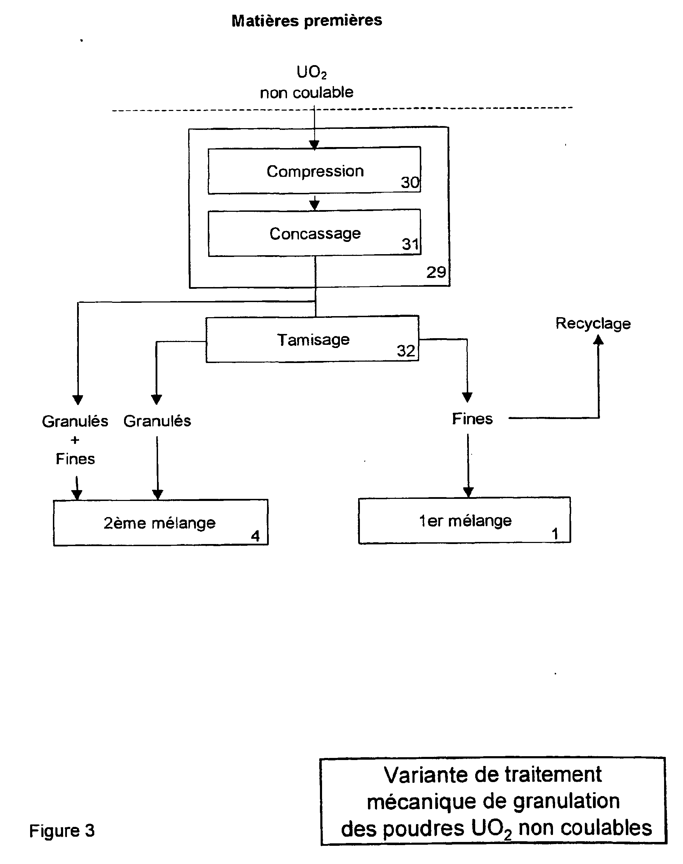

Ledit procédé de l'invention comprend de plus (figure 2) un traitement mécanique de granulation préalable de tout ou partie de l'UO₂ non coulable (étape 29). Ce traitement peut comprendre par exemple :
- soit (figure 3) des étapes de compression en comprimés (étape 30) de l'UO₂ non coulable et de concassage de ces comprimés (étape 31) et, le cas échéant, de tamisage (étape 32) de la matière concassée pour former des granulés coulables de propriétés adéquates pour être incorporés, en tant que constituant de base dans le second mélange (étape 4) ou, en variante, dans les deux mélanges (étapes 1 et 4), tout en gardant la composition chimique et la taille de grain originales de l'UO₂ de départ,
- soit une étape d'agglomération/précompaction/granulation par forçage de la poudre d'UO₂ non coulable à travers un tamis ou grille (étape 29), la quantité d'additif(s), la maille du tamis ou grille et la pression exercée sur la poudre étant ajustées pour former des granulés possédant les propriétés adéquates décrites ci-dessus.

Quelques paramètres, qui ne sont pas limitatifs, du procédé de fabrication de pastilles sont donnés ci-après à titre d'exemple :
- travail par lots et par campagne plutôt qu'en continu,
- teneur en plutonium du premier mélange : 20 à 40% (étape 1),
- broyage (étape 4) par quantité de 60 kg pendant une durée minimale effective de 5 heures,
- utilisation de poudres d'UO₂ non coulables en provenance d'une conversion par voie humide (par exemple : poudre ex-ADU ou diuranate d'ammonium) ou d'une conversion par voie sèche (connues de l'homme du métier),
- addition de 0,2 à 0,5 % de stéarate de zinc et de 0 à 1 % d'agent porogène AZB (connu de l'homme du métier),
- compression de pastillage (étape 6) à une pression entre 400 et 700 MPa,
- frittage (étape 7) d'au moins 4 heures à une température comprise entre 1600 et 1760°C, sous une ambiance d'argon avec 5% d'hydrogène et un rapport H₂/H₂O de 10 à 30,
- rectification sans centre (centerless) à sec (étape 8).

A titre d'exemple non limitatif, la compression de l'étape 30 peut être réalisée à une pression comprise entre 50 et 200 MPa, à adapter selon les caractéristiques de la poudre non coulable. Ces pressions sont donc plus élevées que les pressions de granulation (4 à 10 MPa) généralement utilisées dans les usines de fabrication de combustible nucléaire UO₂. Du liant et/ou lubrifiant, bien connus de l'homme de métier, peuvent être incorporés avant compression dans la poudre d'UO₂ non coulable : à titre d'exemple non limitatif, la compression peut ainsi être effectuée à une pression comprise entre 40 et 100 MPa.

A titre d'exemple non limitatif aussi, le concassage des comprimés précités peut être réalisé dans un ou plusieurs broyeurs à mâchoires ou à rouleaux, d'ouverture 200-250 µm. Ce concassage peut être suivi d'un tamisage si le concasseur laisse ou risque de laisser passer des granulés de taille supérieure à 250 µm. Les fines résultant éventuellement du concassage peuvent utilement être incorporées à titre de matière première dans le premier mélange (étape 1).

A titre d'exemple non limitatif encore, le forçage à travers un tamis (étape 29) peut être réalisé dans un appareil du genre utilisé dans les procédés de type MIMAS (étape 3) pour conditionner le premier mélange (après la micronisation de l'étape 2) et avant le second mélange (étape 4). De tels appareils, qui combinent l'agglomération/précompaction en amont du tamis, et la maîtrise de la taille maximale des granulés par passage à travers ce même tamis peuvent produire directement des granulés de caractéristiques souhaitées.

L'expérience a montré à la déposante qu'une poudre non coulable traitée selon le procédé objet de l'invention peut être utilisée dans les dispositifs existants de fabrication MOX, moyennant un ajustement des paramètres de la seconde opération de mélange (étape 4), du pastillage (étape 6) et du frittage (étape 7), dans les limites d'ajustement utilisées en routine pour optimiser le procédé de fabrication en fonction des caractéristiques des diverses poudres d'UO₂ coulables utilisées pour la fabrication du combustible MOX.

Le procédé de l'invention permet donc d'élargir la gamme des poudres d'UO₂ qui peuvent être mises en oeuvre pour la fabrication du combustible MOX, sans perdre le bénéfice de la similitude entre le combustible MOX produit suivant l'invention et le combustible UO₂ fabriqué industriellement, par les procédés connus à ce jour, à partir d'une même poudre d'UO₂ non coulable.

Il doit être entendu que la présente invention n'est en aucune façon limitée aux formes de réalisation décrites ci-dessus et que bien des modifications, peuvent y être apportées sans sortir du cadre des revendications données ci-dessous.

Le procédé de conditionnement de l'UO₂ non coulable peut notamment s'appliquer à de l'UO₂ provenant d'une conversion autre que la conversion d'hexafluorure d'uranium en UO₂.

## Revendications

1. Procédé de fabrication de pastilles de combustible nucléaire d'oxyde mixte d'(U, Pu)O₂,
- comprenant:
* un dosage et un premier mélange (1) de poudres de PuO₂ et/ou d'UO₂ et/ou de rebuts de fabrication de combustible,
* une micronisation (2) et un tamisage forcé (3) de ce premier mélange,
* un nouveau dosage et un second mélange (4) du premier mélange ainsi traité, d'UO₂ et, éventuellement, de rebuts,
* une addition et un mélange d'agents de lubrification et/ou de contrôle de porosité (5), séparément ou en combinaison avec l'étape du second mélange (4),
* un pastillage (6) du second mélange, et
* un frittage (7) des pastilles ainsi formées,
- **caractérisé en ce qu'**il comprend en outre, pour au moins une partie des poudres d'UO₂:
* une sélection d'UO₂ non coulable et
* un traitement mécanique (29) de granulation de celui-ci, de manière à le rendre coulable, avant d'utiliser l'UO₂ ainsi granulé dans au moins ledit second mélange.

2. Procédé suivant la revendication 1, **caractérisé en ce qu'**il comprend pour ledit traitement de granulation :
* une compression (30) de l'UO₂ non coulable en comprimés à une pression supérieure à celles utilisées pour la granulation usuelle d'UO₂,
* un concassage (31) des comprimés obtenus, jusqu'à former une matière concassée coulable, et
* une utilisation d'au moins une partie de cette matière concassée coulable pour ledit second mélange (4).

3. Procédé suivant la revendication 2, **caractérisé en ce que** la compression (30) est réalisée à une pression comprise entre 40 et 200 MPa.

4. Procédé suivant la revendication 2, **caractérisé en ce que** l'on utilise pour l'étape de concassage (31) un broyeur à mâchoires ou à cylindres.

5. Procédé suivant l'une quelconque des revendications 1 à 4, **caractérisé en ce qu'**il comprend de plus une sélection de granulométrie par tamisage (32) de l'UO₂ granulé, avant son utilisation.

6. Procédé suivant la revendication 5, **caractérisé en ce que**, par le tamisage (32), on sépare l'UO₂ granulé en au moins deux fractions de granulométries différentes, la fraction la plus fine pouvant être introduite dans le premier mélange (1) précité tandis que l'autre est incorporée dans le second mélange (4).

7. Procédé suivant la revendication 1, **caractérisé en ce qu'**il comprend, pour effectuer ladite granulation de l'UO₂ non coulable, un forçage de celui-ci à travers une grille ou tamis, la quantité d'additif(s), la maille du tamis ou grille et la pression exercée sur la poudre étant ajustées pour former des granulés possédant les propriétés adéquates.

8. Procédé suivant l'une quelconque des revendications 1 à 7, **caractérisé en ce que**, pour ladite granulation de l'UO₂ non coulable, on ajoute à celui-ci un lubrifiant.

9. Procédé suivant l'une quelconque des revendications 1 à 8, **caractérisé en ce que**, pour ladite granulation de l'UO₂ non coulable, on ajoute à celui-ci un liant.

10. Procédé suivant l'une quelconque des revendications 1 à 9, **caractérisé en ce que** l'on effectue le frittage (7) des pastilles de combustible dans une atmosphère d'argon et d'hydrogène, à une température comprise entre 1600 et 1760°C, l'argon pouvant être remplacé par de l'azote.

11. Procédé suivant l'une quelconque des revendications 1 à 10, **caractérisé en ce que**, au cours du frittage (7), on ajuste la pression partielle d'oxygène, de préférence par un ajustement du rapport H₂/H₂O dans le gaz de balayage, pour améliorer l'interdiffusion des oxydes PuO₂ et UO₂.

## Patentansprüche

1. Verfahren zur Herstellung von Kernbrennstofftabletten aus (U, Pu)O₂ Mischoxid umfassend:
- Dosieren und erstes Mischen (1) von PuO₂ und/oder UO₂ Pulvern und/oder Ausschüssen der Brennstoffherstellung,
- Mikronisieren (2) und Drucksieben (3) der ersten Mischung,
- weiteres Dosieren und zweites Mischen (4) der so behandelten ersten Mischung, von UO₂ und gegebenenfalls von Ausschüssen,
- Zugabe und Mischen von Schmierstoffen und/oder Porositätskontrolle (5), getrennt von oder in Kombination mit dem Schritt des zweiten Mischens (4),
- Tablettieren (6) der zweiten Mischung und Sintern (7) der so gebildeten Tabletten,
**dadurch gekennzeichnet, dass** es ferner für mindestens einen Teil der UO₂ Pulver umfasst:
- Selektieren von nicht fließfähigem UO₂ und
- mechanische Granulierungsbehandlung (29) dessen, um es fließfähig zu machen, bevor das auf diese Weise granulierte UO₂ in mindestens der zweiten Mischung verwendet wird.

2. Verfahren nach Anspruch 1, **dadurch gekennzeichnet, dass** die Granulierungsbehandlung umfasst:
- Pressen (30) von nicht fließfähigem UO₂ zu Tabletten, bei einem Druck, der höher ist als jener, der beim üblichen Granulieren von UO₂ verwendet wird,
- Zerkleinern (31) der erhaltenen Tabletten bis zur Bildung eines zerkleinerten, fließfähigen Materials sowie
- Verwendung mindestens eines Teils des zerkleinerten, fließfähigen Materials für die zweite Mischung (4).

3. Verfahren nach Anspruch 2, **dadurch gekennzeichnet, dass** das Pressen (30) bei einem Druck zwischen 40 und 200 MPa durchgeführt wird.

4. Verfahren nach Anspruch 2, **dadurch gekennzeichnet, dass** beim Schritt der Zerkleinerung (31) ein Backenbrecher oder eine Walzenmühle verwendet wird.

5. Verfahren nach einem der Ansprüche 1 bis 4, **dadurch gekennzeichnet, dass** es ferner eine Selektion der Korngröße durch Sieben (32) des granulierten UO₂ vor dessen Verwendung umfasst.

6. Verfahren nach Anspruch 5, **dadurch gekennzeichnet, dass** das granulierte UO₂ beim Sieben (32) in mindestens zwei Fraktionen unterschiedlicher Korngröße geteilt wird, wobei die feinere Fraktion in die erste Mischung (1) eingeführt werden kann, während die andere in die zweite Mischung (4) aufgenommen wird.

7. Verfahren nach Anspruch 1, **dadurch gekennzeichnet, dass** es zum Granulieren des nicht fließfähigen UO₂, ein Pressen dessen durch ein Gitter oder ein Sieb umfasst, wobei die Menge des/der Zusatzstoffe(s), die Maschen des Siebes oder Gitters und der auf das Pulver ausgeübte Druck so angepasst werden, dass Körnchen gebildet werde, welche die geeigneten Eigenschaften aufweisen.

8. Verfahren nach einem der Ansprüche 1 bis 7, **dadurch gekennzeichnet, dass** zum Granulieren des nicht fließfähigen UO₂ ein Schmiermittel zugegeben wird.

9. Verfahren nach einem der Ansprüche 1 bis 8, **dadurch gekennzeichnet, dass** zum Granulieren des nicht fließfähigen UO₂ ein Bindemittel zugegeben wird.

10. Verfahren nach einem der Ansprüche 1 bis 9, **dadurch gekennzeichnet, dass** das Sintern (7) der Kernbrennstofftabletten in einer Atmosphäre aus Argon und Wasserstoff, bei einer Temperatur zwischen 1600 und 1760 °C durchgeführt wird, wobei das Argon durch Stickstoff ersetzt werden kann.

11. Verfahren nach einem der Ansprüche 1 bis 10, **dadurch gekennzeichnet, dass** im Laufe des Sinterns (7) der Sauerstoffpartialdruck angepasst wird, vorzugsweise durch eine Anpassung des Verhältnisses H₂/H₂O im Mischgas, zur Verbesserung der Interdiffusion der PuO₂ und UO₂ Oxide.

## Claims

1. A process for manufacturing (U,Pu)O₂ mixed oxide nuclear fuel pellets,
- comprising :
* dosing and first blending (1) of PuO₂ and/or UO₂ powders and/or fuel manufacturing scrap;
* micronisation (2) and forced sieving (3) of this first blend;
* additional dosing and second blending (4) of the first blend thus treated, UO₂ and possibly scrap;
* addition and blending of lubricants and/or poreformers (5), separately or in combination with the second blending step (4);
* pelletising (6) of the second blend; and
* sintering (7) of the pellets thus formed,
- **characterised in that** it further comprises, for at least one portion of the UO₂ powders :
* selection of non-free-flowing UO₂; and
* mechanical granulation treatment (29) of the UO₂ so as to make it free-flowing, before the UO₂ is used as granules in at least said second blending operation.

2. The process according to claim 1, **characterised in that** it comprises, for said granulation treatment :
* compression (30) of the non free flowing UO₂ into tablets at a pressure greater than that used for the usual UO₂ granulation;
* crushing (31) of the tablets obtained, until a free flowing crushed material has been formed; and
* use of at least one portion of this free flowing crushed material for said second blending operation (4).

3. The process according to claim 2, **characterised in that** the compression (30) is carried out at a pressure of between 40 and 200 MPa.

4. The process according to claim 2, **characterised in that** a jaw crusher or a roll mill is used for the crushing step (31).

5. The process according to any one of claims 1 to 4, **characterised in that** it furthermore comprises particle size selection by sieving (32) of the granulated UO₂ before it is used.

6. The process according to claim 5, **characterised in that** the granulated UO₂ is separated, by the sieving (32), into at least two fractions of different particle sizes, the finest fraction possibly being introduced into the aforementioned first blending operation (1) whereas the other fraction is incorporated into the second blending operation (4).

7. The process according to claim 1, **characterised in that** it comprises, in order to carry out said granulation of the non-free-flowing UO₂, an operation to force the latter through a screen or sieve, the amount of additive(s), the mesh size of the screen or sieve and the pressure exerted on the powder all being adjusted so as to form granules having the appropriate properties.

8. The process according to any one of claims 1 to 7, **characterised in that**, for said granulation of the non-free-flowing UO₂, a lubricant is added to it.

9. The process according to any one of claims 1 to 8, **characterised in that**, for said granulation of the non-free-flowing UO₂, a binder is added to it.

10. The process according to any one of claims 1 to 9, **characterised in that** the sintering (7) of the fuel pellets in an atmosphere of argon and hydrogen is carried out at a temperature between 1600 and 1760°C, the argon possibly being replaced with nitrogen.

11. The process according to any one of claims 1 to 10, **characterised in that**, during the sintering (7), the oxygen partial pressure is adjusted, preferably by adjusting the H₂/H₂O ratio in the flushing gas, in order to improve the interdiffusion of the PuO₂ and UO₂ oxides.
